# FASCICULE DE BREVET EUROPEEN

(11) **EP 2 448 749 B1**
(45) Date de publication et mention de la délivrance du brevet: **17.04.2019**
(21) Numéro de dépôt: 10745334.2
(22) Date de dépôt: 25.06.2010
(51) Int. Cl.: B29C 70/20, B29C 70/52

(54) **DISPOSITIF DE RÉALISATION D'UN PROFILÉ DE FIBRES EN MATÉRIAU COMPOSITE AYANT UNE SECTION EN DEMI TÊTE DE CLOU OU EN TÊTE DE CLOU**
VORRICHTUNG ZUR HERSTELLUNG EINES PROFILABSCHNITTS AUS VERBUNDSTOFFFASERN MIT HALBNAGELKOPF- ODER NAGELKOPFFÖRMIGEM QUERSCHNITT
APPARATUS FOR MAKING A PROFILE SECTION MADE OF COMPOSITE MATERIAL FIBERS AND HAVING A CROSS-SECTION IN THE SHAPE OF A HALF OF A NAIL HEAD OR OF A NAIL HEAD

(30) Priorité: 29.06.2009 FR 0954402
(43) Date de publication de la demande: 09.05.2012
(73) Titulaire: Airbus Operations (S.A.S.), 31060 Toulouse (FR)
(72) Inventeur: BLOT, Philippe, F-44000 Nantes (FR); LANNUZEL, Mathieu, F-44800 Saint Herblain (FR); VINOT, Pascal, F-44980 Sainte Luce sur Loire (FR)
(74) Mandataire: Fantin, Laurent
(86) Numéro de dépôt international: PCT/FR2010/051314
(87) Numéro de publication internationale: WO 2011/001080

(56) Documents cités:
- EP-A1- 2 006 074
- WO-A1-98/50211
- GB-A- 1 146 276
- US-A- 4 151 031

## Description

La présente invention se rapporte à un dispositif de réalisation d'un profilé de fibres en matériau composite ayant une section en demi-tête de clou ou en tête de clou conformément à la revendication 1. Un procédé et dispositif de réalisation de profilés de fibre en matériau composite est connu de la divulgation EP 2006074 A1.

Certaines pièces en matériau composite sont réalisées à partir de préformes de renfort fibreux assemblées, disposées dans un moule puis noyées dans une matrice de résine.

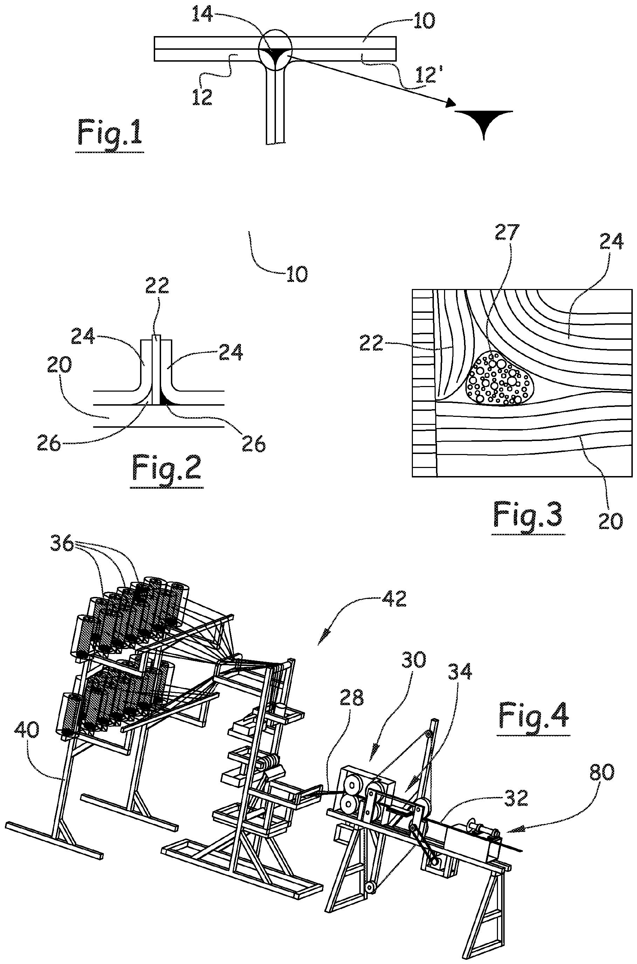

Pour obtenir une forme en T, selon un premier mode de réalisation illustré sur la figure 1, trois préformes sont assemblées, une première préforme 10 appelée semelle sensiblement plane, puis deux autres préformes en L 12, 12' disposées de manière symétrique, chacune des préformes en L ayant une première aile plaquée contre une aile de l'autre préforme en L et une seconde aile plaquée contre la semelle 10. Les préformes en L 12, 12' possédant au niveau de la jonction des ailes un rayon de courbure plus ou moins important, il subsiste au niveau de la jonction des trois préformes un espace 14 ayant la forme d'une tête de clou. Dans ce cas, cet espace 14 a une section avec une face plane et deux faces concaves et courbes.

Selon un autre mode de réalisation illustré sur la figure 2, au moins trois préformes sont assemblées, une première préforme 20 appelée semelle, sensiblement plane, une deuxième préforme 22 formant le pied du T dont un chant est plaqué contre la semelle 20 et au moins une troisième préforme 24 en L dont une première aile est plaquée contre la semelle 20, l'autre aile étant plaquée contre la préforme 22. La préforme 24 possédant au niveau de la jonction des ailes un rayon de courbure plus ou moins important, il subsiste au niveau de la jonction des préformes 20 à 24 un espace ayant la forme d'une demi-tête de clou 26. Dans ce cas, cet espace 26 a une section avec deux faces planes et une face concave et courbe.

Pour assurer la santé du matériau de la pièce résultant d'une bonne maîtrise de l'injection de résine, l'espace 14 ou 26 doit être rempli de renforts fibreux. Selon un mode de réalisation, un opérateur toronne des fibres de carbone pré poudrées de manière à obtenir un toron 27 de section circulaire. Il positionne alors le toron 27 ainsi réalisé dans l'espace 14 ou 26 à l'aide par exemple d'un ruban adhésif puis le chauffe avec un fer à repasser pour que ledit toron 27 se solidarise avec les autres préformes.

Ce mode de réalisation ne donne pas satisfaction car il ne permet pas d'obtenir un remplissage optimisé de l'espace 14 ou 26 compte tenu de la section sensiblement circulaire du toron. Les cavités non remplies favorisent l'apparition de chemins préférentiels de résine qui perturbent le remplissage du moule et par conséquent augmentent les risques de zones fortement poreuses et/ou de zones sèches.

Selon un autre inconvénient, comme illustré sur la figure 3, les sous-préformes environnantes du toron 27 utilisé pour remplir l'espace 14 ou 26 sont déformées lors de l'assemblage des préformes ou lors de la fermeture du moule ce qui affecte les caractéristiques mécaniques de la pièce ainsi réalisée en raison des ondulations des fibres.

Aussi, la présente divulgation vise à pallier les inconvénients de l'art antérieur en proposant un procédé de réalisation d'un profilé en matériau composite ayant une section en demi-tête de clou ou en tête de clou permettant de combler de manière optimale un espace entre des préformes assemblées en T de manière à obtenir une pièce en matériau composite afin de garantir les caractéristiques mécaniques requises de ladite pièce en matériau composite.

A cet effet, la divulgation a pour objet un procédé de réalisation d'un profilé de fibres destiné à combler un espace avec une section en forme de tête de clou ou de demi-tête de clou découlant de l'assemblage en T de préformes dont au moins une comprend un rayon de courbure au niveau de la zone de jonction desdites préformes, caractérisé en ce qu'il consiste à alimenter en fibres enduites de poudre un poste de préformage au niveau duquel ladite poudre est activée et lesdites fibres défilent dans un passage dont les formes sont adaptées à celles du profilé désiré, puis à faire défiler lesdites fibres préformées dans un poste de conformage au niveau duquel ledit profilé de fibres est refroidi et conformé en circulant dans une cavité dont les formes sont adaptées à celles du profilé désiré.

D'autres caractéristiques et avantages ressortiront de la description qui va suivre de la divulgation, description donnée à titre d'exemple uniquement, en regard des dessins annexés sur lesquels :
- la figure 1 est une coupe illustrant une première variante d'assemblage de préformes délimitant un espace avec une forme en tête de clou,
- la figure 2 est une coupe illustrant une autre variante d'assemblage de préformes délimitant un espace avec une forme en demi tête de clou,
- la figure 3 est une coupe illustrant un assemblage de préformes avec un toron selon l'art antérieur utilisé pour combler un espace entre les préformes tel qu'illustré sur la figure 2,
- la figure 4 est une vue en perspective d'un dispositif pour réaliser un profilé de fibres selon la divulgation,
- la figure 5 est une vue illustrant une partie du dispositif de la figure 4 permettant le préformage et le conformage d'un profilé de fibres selon la divulgation,
- la figure 6 est une coupe des moyens de préformage du dispositif selon la divulgation,
- la figure 7A est un schéma des moyens de préformage selon une première variante de la divulgation adaptés pour obtenir un profilé avec une section en forme de demi-tête de clou,
- la figure 7B est un schéma des moyens de préformage selon une autre variante de la divulgation adaptés pour obtenir un profilé avec une section en forme de tête de clou,
- la figure 8A est un schéma des moyens de conformage selon une première variante de la divulgation adaptés pour obtenir un profilé avec une section en forme de demi-tête de clou,
- la figure 8B est un schéma des moyens de conformage selon une autre variante de la divulgation adaptés pour obtenir un profilé avec une section en forme de tête de clou,
- la figure 9 est un schéma illustrant une autre variante des moyens de conformage,
- la figure 10 est une vue en perspective de moyens de poudrage de fibres utilisées pour réaliser un profilé de fibres selon la divulgation,
- la figure 11 est une coupe illustrant les moyens de stockage et de dévidage de fibres utilisées pour réaliser un profilé de fibres selon l'invention,
- la figure 12 est une coupe illustrant un assemblage de préformes intégrant un profilé avec une section en forme de demi-tête de clou selon la divulgation,
- la figure 13 est un schéma illustrant une autre variante des moyens de conformage permettant d'obtenir un profilé courbe, et
- la figure 14 est un schéma illustrant une autre variante des moyens de conformage permettant d'obtenir un profilé courbe.

Sur la figure 1, on a représenté une première variante d'un assemblage de préformes disposées en T, comportant une première préforme 10 appelée semelle sensiblement plane, ainsi que deux autres préformes en L 12, 12' disposées de manière symétrique, chacune des préformes en L ayant une première aile plaquée contre une aile de l'autre préforme en L et une seconde aile plaquée contre la semelle 10. Les préformes en L 12, 12' possédant au niveau de la jonction des ailes un rayon de courbure plus ou moins important, il subsiste au niveau de la jonction des trois préformes un espace 14 ayant une section en forme de tête de clou. Dans ce cas, cet espace 14 a une section avec une face plane et deux faces concaves et courbes.

Sur la figure 2, on a représenté une autre variante d'un assemblage de préformes disposées en T, comportant une première préforme 20 appelée semelle, sensiblement plane, une deuxième préforme 22 formant le pied du T dont un chant est plaqué contre la semelle 20 et au moins une troisième préforme 24 en L dont une première aile est plaquée contre la semelle 20, l'autre aile étant plaquée contre la préforme 22. La préforme 24 possédant au niveau de la jonction des ailes un rayon de courbure plus ou moins important, il subsiste au niveau de la jonction des préformes 20 à 24 un espace ayant une section en forme de demi-tête de clou 26. Dans ce cas, cet espace 26 a une section avec deux faces planes et une face concave et courbe.

Selon les deux variantes, au moins une des préformes assemblées de manière à former un T comprend un rayon de courbure au niveau de la zone de jonction desdites préformes.

Sur la figure 4, on a représenté un dispositif permettant de réaliser un profilé de fibres avec une section en forme de demi-tête de clou ou en tête de clou selon la divulgation.

Ce dispositif comprend des moyens d'alimentation en fibres 28 enduites de poudre, un poste de préformage 30 à une température supérieure ou voisine de la température de mise en oeuvre de ladite poudre permettant d'obtenir un profilé de fibres 32, un poste de conformage 34 assurant un refroidissement du profilé 32 pour garantir audit profilé les dimensions requises.

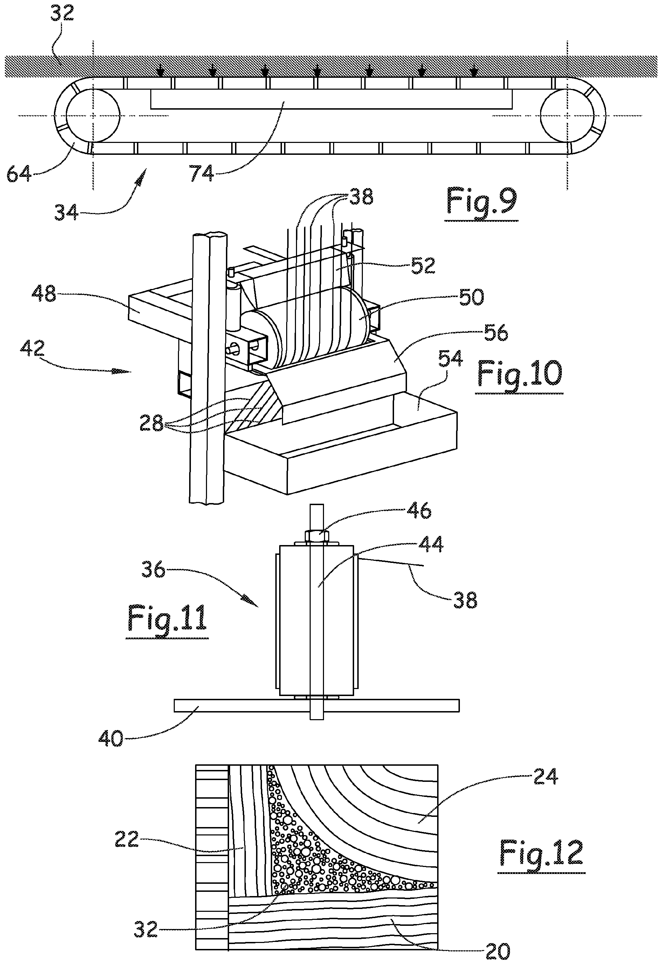

Selon un mode de réalisation, les moyens d'alimentation en fibres poudrées 28 comprennent deux parties, une première partie comportant plusieurs dévidoirs 36 de rouleaux de fibres sèches 38 (visible sur la figure 11) rapportés sur un support appelé contre 40 ainsi qu'une seconde partie comportant des moyens 42 de poudrage des fibres sèches 38.

De préférence, le dévidoir 36 comprend des moyens de réglage de la tension des fibres pour assurer un bon fonctionnement du dispositif. Selon l'exemple illustré sur la figure 11, le dévidoir 36 comprend un axe de rotation 44 fixé sur le contre 40 ainsi qu'un écrou 46 permettant de régler le serrage du rouleau. Ce serrage permet d'éviter que les rouleaux se déroulent de façon non maîtrisée sous l'action du poids des fibres en sortie de rouleau et d'obtenir une tension des fibres dans le dispositif. Cette tension est notamment nécessaire pour assurer le bon fonctionnement des moyens 42 de poudrage.

Selon un mode de réalisation, les moyens de poudrage comprennent au moins un poste de poudrage illustré en détails sur la figure 10. Les moyens de poudrage peuvent comprendre deux postes comme illustré sur la figure 4.

Ce poste comprend une trémie de stockage 48 de la poudre, un tambour 50 à la surface duquel est rapportée la poudre grâce à un premier racleur 52 et contre lequel sont plaquées les fibres sèches 38. La poudre qui n'a pas adhéré aux fibres tombe dans un bac de récupération 54. De préférence, un second racleur 56 peut être prévu pour retirer la poudre en excès.

A titre d'exemple, la poudre peut être une poudre de résine thermodurcissable ou une poudre de résine thermoplastique.

Les fibres poudrées 28 pénètrent ensuite dans le poste de préformage 30 comprenant des moyens pour activer la poudre et des moyens pour presser les fibres 28 les unes contre les autres de manière à obtenir un profilé de fibres 32.

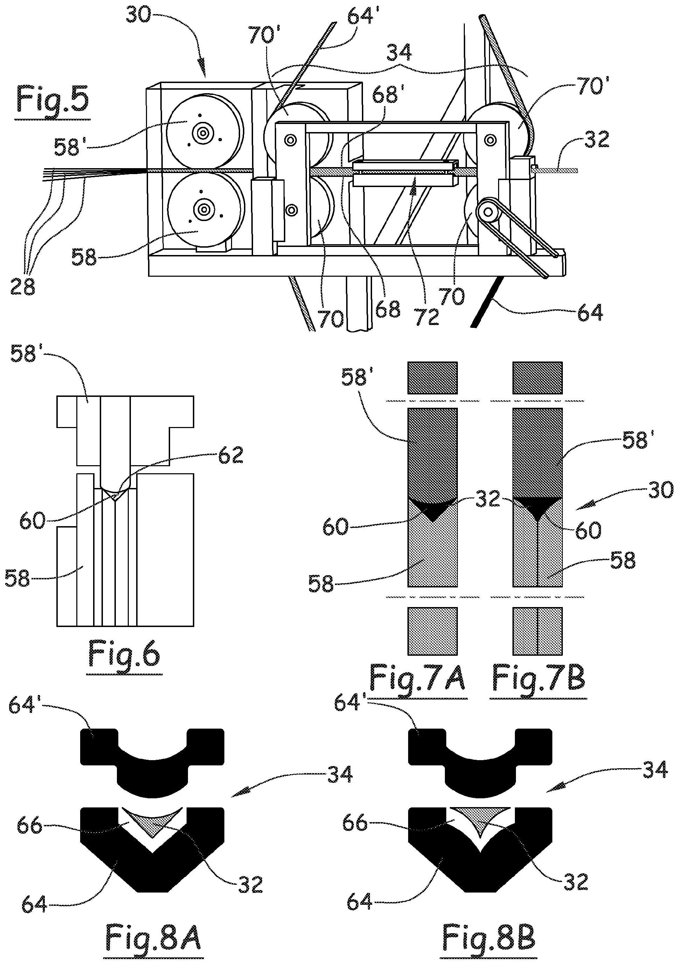

Selon un mode de réalisation illustré sur les figures 5, 6, 7A et 7B, le poste de préformage 30 comprend deux galets 58, 58' dont les axes de rotation sont disposés perpendiculairement à la direction d'avance des fibres 28, de préférence horizontalement.

Au moins l'un des galets 58, 58' comprend au niveau de sa surface périphérique une rainure 60 dans laquelle défilent les fibres.

De préférence, le galet inférieur 58 comprend une rainure 60.

Les galets sont disposés de manière à ce que leurs surfaces périphériques soient tangentes afin de définir un passage 62 dont les dimensions sont adaptées à celles du profilé de fibres à obtenir.

Dans le cas d'un profilé de fibres avec une section en forme de demi-tête de clou comme illustré sur les figures 6 et 7A, le galet inférieur 58 présente une rainure en V à angle droit alors que le galet supérieur 58' présente au niveau de sa surface périphérique une forme courbe convexe adaptée à la forme concave et courbe du profilé de fibres que l'on souhaite obtenir.

Dans le cas d'un profilé de fibres avec une section en forme de tête de clou comme illustré sur la figure 7B, le galet inférieur 58 présente une rainure en forme de V avec des ailes courbes et convexes dont les formes sont adaptées aux formes courbes et concaves du profilé que l'on souhaite obtenir alors que le galet supérieur 58' présente une surface périphérique sensiblement rectiligne. Selon les variantes, des moyens peuvent être prévus pour tendre à rapprocher les axes de rotation des galets 58, 58' de manière à exercer une pression sur les fibres.

Selon un mode de réalisation, l'activation de la poudre est obtenue par chauffage en portant ladite poudre à une température supérieure ou voisine de sa température de mise en oeuvre. Dans ce cas, au moins un des galets comprend des moyens de chauffage, par exemple une résistance. En variante, les galets 58, 58' peuvent être placés dans une enceinte et/ou des moyens pour souffler de l'air chaud peuvent être prévus pour chauffer les fibres poudrées 28.

Comme illustré sur les figures 5, 8A et 8B, le poste de conformage 34 comprend deux courroies 64, 64' qui coopèrent l'une avec l'autre de manière à définir une cavité 66 dans laquelle est disposé le profilé de fibres chaud sortant du poste de préformage 30.

Les courroies 64, 64' disposent chacune d'une portion sensiblement rectiligne 68, respectivement 68', tendue entre deux poulies 70, respectivement 70'.

Au droit de ces portions sensiblement rectilignes 68, 68', les courroies 64, 64' coopèrent de manière à définir une cavité 66. Des moyens 72 sont prévus pour plaquer les courroies 64, 64' l'une contre l'autre afin d'exercer une pression sur le profilé de fibres afin que la rotation des courroies engendre l'entraînement continu des fibres et du profilé de fibres dans le dispositif.

Le poste de conformage permet de refroidir le profilé de fibres et de le calibrer afin de lui conférer une section avec des dimensions précises adaptées à l'espace 14 ou 26 ménagé entre les préformes.

Dans le cas d'un profilé avec une section en forme de demi-tête de clou comme illustré sur la figure 8A, une courroie 64 comprend une section avec une forme en creux en V à angle droit alors que l'autre courroie 64' comprend une section avec une forme en saillie avec une portion courbe et convexe adaptée à la forme concave et courbe du profilé de fibres que l'on souhaite obtenir.

Dans le cas d'un profilé avec une section en forme de tête de clou comme illustré sur la figure 8B, une courroie 64 comprend une section avec une forme en creux en V avec des ailes courbes et convexes dont les formes sont adaptées aux formes courbes et concaves du profilé que l'on souhaite obtenir alors que l'autre courroie 64' comprend une section avec une forme plate.

Selon les cas, il est possible d'utiliser au moins une courroie 64, 64' poreuse soumise localement à une dépression ménagée dans une enceinte 74 afin d'améliorer l'adhérence sur le profilé, comme illustré sur la figure 9.

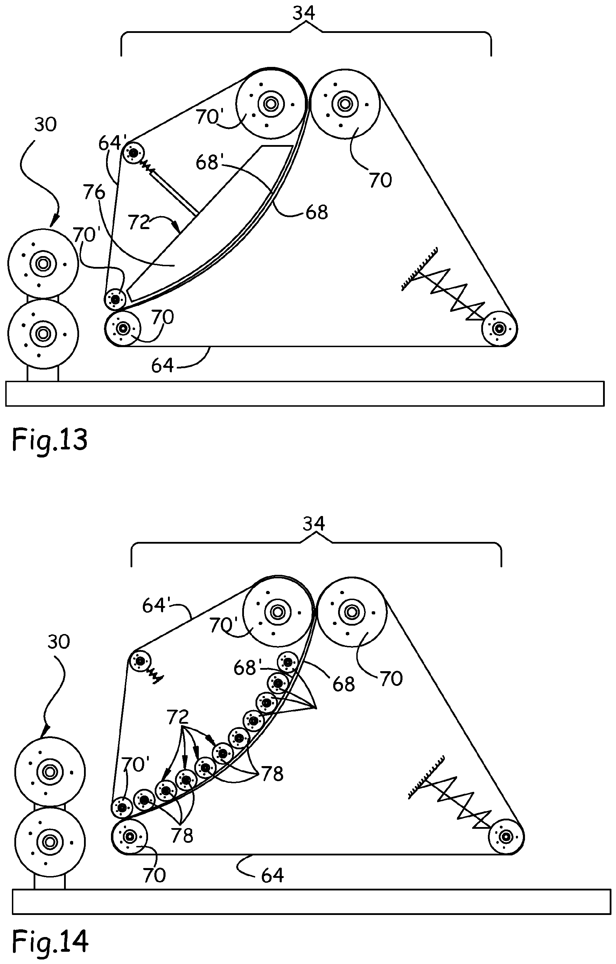

Selon les cas, il est possible d'obtenir un profilé rectiligne, comme illustré sur les figures 5 et 9, ou courbe comme illustré sur les figures 13 et 14.

Dans le cas d'un profilé courbe, le poste de conformage 34 comprend comme précédemment deux courroies 64, 64' qui coopèrent l'une avec l'autre de manière à définir une cavité 66 dans laquelle est disposé le profilé de fibres chaud sortant du poste de préformage 30.

Les courroies 64, 64' disposent chacune d'une portion de conformage 68, respectivement 68', entre deux poulies 70, respectivement 70'. Contrairement à la variante illustrée sur la figure 5, les portions de conformage 68, 68' ne sont pas rectilignes mais courbes de manière à conférer au profilé une forme courbe. Comme pour la variante permettant d'obtenir un profilé rectiligne, au droit des portions de conformage 68, 68', les courroies 64, 64' coopèrent de manière à définir une cavité 66. Des moyens 72 sont prévus pour plaquer les courroies 64, 64' l'une contre l'autre afin d'exercer une pression sur le profilé de fibres afin que la rotation des courroies engendre l'entraînement continu des fibres et du profilé de fibres dans le dispositif.

Dans le cas d'un profilé courbe, les courroies 64 et 64' sont courbes dans la zone où elles coopèrent.

Selon une première variante illustrée sur la figure 13, les moyens 72 peuvent se présenter sous la forme d'un patin 76 en un matériau avec un faible coefficient de frottement dont la surface en contact avec l'une des courroies 64, 64' (la courroie 64' sur la figure 13) a une forme adaptée au rayon de courbure souhaité du profilé.

Selon une autre variante illustrée sur la figure 14, les moyens 72 peuvent se présenter sous la forme d'une série de galets 78 dont les axes de pivotement sont disposés en fonction du rayon de courbure souhaité du profilé.

En complément, le dispositif de la divulgation peut comprendre des moyens 80 pour découper le profilé, par exemple au moins une bride pour serrer le profilé et un disque rotatif pour le tronçonner.

Le procédé de la divulgation permet d'obtenir un profilé de fibres dont les formes sont parfaitement adaptées à celles de l'espace découlant de l'assemblage des préformes.

L'espace 14 ou 26 étant parfaitement comblé par le profilé de fibres, les risques d'apparition de chemins préférentiels de résine sont réduits ce qui limite les perturbations lors du remplissage du moule et par conséquent les risques de zones fortement poreuses et/ou de zones sèches.

Selon un autre avantage, le profilé ayant des formes parfaitement adaptées à celles de l'espaces 14 ou 26, les fibres des préformes adjacentes au profilé sont moins désorientées ce qui permet également de réduire les risques d'altérations des caractéristiques mécaniques de la pièce ainsi obtenue.

La divulgation n'est pas limitée à une préforme en Té mais peut également s'appliquer à d'autres formes de préformes, notamment à une préforme en I qui équivaut à deux formes en Té.

## Revendications

1. Dispositif de réalisation d'un profilé de fibres (32) destiné à combler un espace (14, 26) avec une section en forme de tête de clou ou de demi-tête de clou découlant de l'assemblage en T de préformes (10, 12, 12', 20, 22, 24) dont au moins une comprend un rayon de courbure au niveau de la zone de jonction desdites préformes, comprenant des moyens d'alimentation en fibres (28) enduites de poudre, un poste de préformage (30) au niveau duquel ladite poudre est activée et lesdites fibres (28) défilent dans un passage (62) dont les formes sont adaptées à celles du profilé désiré, et un poste de conformage (34) au niveau duquel ledit profilé de fibres (32) est refroidi et conformé en circulant dans une cavité (66) dont les formes sont adaptées à celles du profilé désiré, le poste de conformage (34) comprenant deux courroies (64, 64') qui coopèrent l'une avec l'autre de manière à définir une cavité (66) dans laquelle est disposé le profilé de fibres chaud sortant du poste de préformage 30).

2. Dispositif de réalisation d'un profilé de fibres (32) selon la revendication 1, **caractérisé en ce que** le poste de préformage (30) comprend deux galets (58, 58') dont les axes de rotation sont disposés perpendiculairement à la direction d'avance des fibres (28) et de manière à ce que leurs surfaces périphériques soient tangentes, au moins l'un des galets (58, 58') comprenant au niveau de sa surface périphérique une rainure (60) délimitant le passage (62).

3. Dispositif de réalisation d'un profilé de fibres (32) selon la revendication 2, **caractérisé en ce qu'**il comprend un premier galet (58) avec une rainure en V à angle droit et un second galet (58') avec au niveau de sa surface périphérique une forme courbe convexe adaptée à la forme concave et courbe du profilé de fibres que l'on souhaite obtenir.

4. Dispositif de réalisation d'un profilé de fibres (32) selon la revendication 2, **caractérisé en ce qu'**il comprend un premier galet (58) avec une rainure en forme de V avec des ailes courbes et convexes dont les formes sont adaptées aux formes courbes et concaves du profilé que l'on souhaite obtenir et un second galet (58') avec une surface périphérique sensiblement rectiligne.

5. Dispositif de réalisation d'un profilé de fibres (32) selon l'une des revendications précédentes, **caractérisé en ce qu'**il comprend une première courroie (64) dont la section a une forme en creux en V à angle droit et une seconde courroie (64') dont la section a une forme en saillie avec une portion courbe et convexe adaptée à la forme concave et courbe du profilé de fibres que l'on souhaite obtenir.

6. Dispositif de réalisation d'un profilé de fibres (32) selon l'une des revendications 1 à 4, **caractérisé en ce qu'**il comprend une première courroie (64) dont la section a une forme en creux en V avec des ailes courbes et convexes dont les formes sont adaptées aux formes courbes et concaves du profilé que l'on souhaite obtenir et une seconde courroie (64') dont la section a une forme plate.

7. Dispositif de réalisation d'un profilé de fibres selon l'une quelconque des revendications précédentes, **caractérisé en ce qu'**il comprend des moyens (72) pour plaquer les courroies (64, 64') l'une contre l'autre afin d'exercer une pression sur le profilé de fibres.

8. Dispositif de réalisation d'un profilé de fibres selon l'une quelconque des revendications précédentes, **caractérisé en ce que** les courroies (64, 64') sont courbes dans la zone où elles coopèrent l'une avec l'autre de manière à définir une cavité (66) dans laquelle est disposé le profilé de fibres chaud sortant du poste de préformage (30).

9. Dispositif de réalisation d'un profilé de fibres selon l'une quelconque des revendications précédentes, **caractérisé en ce qu'**au moins une courroie (64, 64') est poreuse et soumise localement à une dépression ménagée dans une enceinte (74).

## Patentansprüche

1. Vorrichtung zur Herstellung eines Faserprofils (32) das dazu bestimmt ist, einen Raum (14, 26) zu füllen, der einen nagelkopfförmigen oder halbnagelkopfförmigen Querschnitt aufweist und der von einem T-förmigen Zusammenbau von Vorformen (10, 12, 12', 20, 22, 24) herrührt, von denen wenigstens eine im Verbindungsbereich der Vorformen einen Krümmungsradius aufweist, mit Zuführmitteln (28) für mit Pulver beschichtete Fasern, mit einer Vorformstation (30), in der das Pulver aktiviert wird und in der die Fasern (28) eine Durchführung (62) durchlaufen, dessen Formen an diejenigen des gewünschten Profils angepasst sind, und mit einer Ausformstation (34), in der das Faserprofil (32) abgekühlt und ausgeformt wird, indem es durch einen Hohlraum (66) hindurchläuft, dessen Formen an diejenigen des gewünschten Profils angepasst sind, wobei die Ausformstation (34) zwei Bänder (64, 64') aufweist, die untereinander zusammenwirken, um auf diese Weise einen Hohlraum (66) zu bilden, in dem die aus der Vorformstation (30) herauslaufenden warmen Faserprofile angeordnet sind.

2. Vorrichtung zur Herstellung eines Faserprofils (32) nach Anspruch 1, **dadurch gekennzeichnet, dass** die Vorformstation (30) zwei Rollen (58, 58') aufweist, deren Drehachsen im rechten Winkel zur Laufrichtung der Fasern (28) und so angeordnet sind, dass sich deren Umfangsflächen berühren, wobei wenigstens eine der Rollen (58, 58') im Bereich seiner Umfangsfläche eine Nut (60) aufweist, die die Durchführung (62) begrenzt.

3. Vorrichtung zur Herstellung eines Faserprofils (32) nach Anspruch 2, **dadurch gekennzeichnet, dass** diese eine erste Rolle (58) mit einer Nut in der Gestalt eines V mit rechtem Winkel aufweist und eine zweite Rolle (58') aufweist, die im Bereich der Umfangsfläche eine gekrümmte konvexe Form aufweist, die an die konkave und gekrümmte Form des Faserprofils angepasst ist, das man erhalten möchte.

4. Vorrichtung zur Herstellung eines Faserprofils (32) nach Anspruch 2, **dadurch gekennzeichnet, dass** diese eine erste Rolle (58) mit einer Nut in der Gestalt eines V mit gekrümmten und konvexen Schenkeln aufweist, deren Formen an die gekrümmten und konkaven des Profils angepasst sind, das man erhalten möchte, und eine zweite Rolle (58') mit einer im wesentlichen geradlinigen Umfangsfläche aufweist.

5. Vorrichtung zur Herstellung eines Faserprofils (32) nach einem der vorhergehenden Ansprüche, **dadurch gekennzeichnet, dass** diese ein erstes Band (64) aufweist, dessen Querschnitt eine hohle Form in Gestalt eines V mit rechtem Winkel aufweist und ein zweites Band (64') aufweist, dessen Querschnitt eine vorspringende Form mit einem gekrümmten und konvexen Abschnitt hat, die an die konkave und gekrümmte Form des Faserprofils, das man erhalten möchte, angepasst ist.

6. Vorrichtung zur Herstellung eines Faserprofils (32) nach einem der Ansprüche 1 bis 4, **dadurch gekennzeichnet, dass** diese ein erstes Band (64) aufweist, dessen Querschnitt eine hohle Form in Gestalt eines V mit gekrümmten und konvexen Schenkeln hat, deren Formen an die gekrümmten und konkaven des Profils angepasst sind, das man erhalten möchte, und ein zweites Band (64') aufweist, dessen Querschnitt eine flache Gestalt hat.

7. Vorrichtung zur Herstellung eines Faserprofils nach einem der vorhergehenden Ansprüche, **dadurch gekennzeichnet, dass** diese Mittel (72) aufweist, um die Bänder (64, 64') aneinander zu pressen, um Druck auf die Faserprofile auszuüben.

8. Vorrichtung zur Herstellung eines Faserprofils nach einem der vorhergehenden Ansprüche, **dadurch gekennzeichnet, dass** die Bänder (64, 64') in dem Bereich, in dem sie zusammenwirken, gekrümmt sind, um auf diese Weise einen Hohlraum (66) zu bilden, in dem das aus der Vorformstation (30) herauslaufende warme Faserprofil angeordnet ist.

9. Vorrichtung zur Herstellung eines Faserprofils nach einem der vorhergehenden Ansprüche, **dadurch gekennzeichnet, dass** wenigstens ein Band (64, 64') porös ist und lokal einem Unterdruck ausgesetzt ist, der in einer Hülle (74) ausgebildet ist.

## Claims

1. Device for production of a fiber profile (32) that fills a first space (14, 26) that has a nail-head-shaped or half-nail-head-shaped cross-section that originates from an assembly of preforms (10, 12, 12', 20, 22, 24) in a T shape, of which at least one comprises a curvature radius at the junction zone of said preforms, the device comprising powder-coated fiber supply means (28), a preforming station (30) where said powder is activated and where fibers (28) move into a passage (62) with a cross-section that corresponds to the cross-section of the desired fiber profile, and a shaping station (34) where said fibers profile (32) is cooled and shaped by circulating in a cavity (66) which cross-section corresponds to the cross-section of the desired fiber profile, the shaping station (34) comprising two belts (64, 64') that work with one another so as to define a cavity (66) in which is arranged the hot fiber profile that exits from the preforming station (30).

2. Device for the production of a fiber profile (32) according to claim 1, wherein the preforming station (30) comprises two rollers (58, 58') whose axes of rotation are arranged perpendicular to the direction of advance of the fibers (28) and so that their peripheral surfaces are tangent, at least one of the two rollers (58, 58') comprising a groove (60) that delimits the passage (62) at its peripheral surface.

3. Device for the production of a fiber profile (32) according to claim 2, wherein it comprises a first roller (58) with a right-angled V-shaped groove and a second roller (58') with a convex curved shape at its peripheral surface that corresponds to the concave curved shape of the desired fiber profile.

4. Device for the production of a fiber profile (32) according to claim 2, wherein it comprises a first roller (58) with a V-shaped groove with curved and convex wings whose shapes correspond to the curved concave shapes of the desired fiber profile and a second roller (58') with an essentially rectilinear peripheral surface.

5. Device for the production of a fiber profile (32) according to one of the preceding claims, it comprises a first belt (64) which cross-section has hollow right-angled V-shape and a second belt (64') which cross-section has a projecting shape with a curved and convex portion that corresponds to the curved and concave shape of the desired fiber profile.

6. Device for the production of a fiber profile (32) according to one of the claims 1 to 4, wherein it comprises a first belt (64) which cross-section has a hollow V-shape with curved and convex wings whose shapes correspond to the curved and concave shapes of the desired fiber profile and a second belt (64') which cross-section has a flat shape.

7. Device for the production of a fiber profile according to one of the preceding claims, wherein it comprises means (72) for flattening the two belts (64, 64') against one another in order to exert pressure on the fiber profile.

8. Device for the production of a fiber profile according to one of the preceding claims, wherein the two belts (64, 64') are curved in a zone where they work with one another so as to define a cavity (66) in which is arranged the hot fiber profile that exits from the preforming station (30).

9. Device for the production of a fiber profile according to one of the preceding claims, wherein at least one of the two belts (64, 64') is porous and subjected locally to negative pressure housed in a chamber (74).
